# EUROPEAN PATENT APPLICATION

(11) **EP 1 002 728 A1**
(43) Date of publication of application: **24.05.2000**
(21) Application number: 99420224.0
(22) Date of filing: 10.11.1999
(51) Int. Cl.: B65B 57/00, F16P 1/02

(54) **Film perforation device**

(30) Priority: 17.11.1998 FR 9814591
(71) Applicant: EASTMAN KODAK COMPANY, Rochester, New York 14650-2201 (US)
(72) Inventor: Briffox, Georges, 71102 Chalon sur Saone Cedex (FR)
(74) Representative: Buff, Michel

(57) **Abstract**

The present invention relates to a device to perforate a film, in particular a packaging film.

The device comprises:
- a perforation means (20);
- a protection means (30) arranged around the perforation means (20); the protection means (30) comprising an arrangement (40) for putting the film into contact with the perforation means (20).

## Description

The present invention relates to a device and a process for perforating a film, and in particular for perforating a strip of packaging film before a packaging operation.

It is commonplace to use shrink-wrap film for packaging products, for instance pallets holding several articles. During the packaging operation, air is often trapped between the various strips of film to the extent that the external dimension of the wrapped pallet is increased. This is clearly not desirable especially when such pallets have to pass through a gauge that checks their dimensions. Therefore it is desirable to perforate the packaging film before any packaging operation to avoid all trapping of air. The Patent Application EP106825 describes a device and a process for perforating a film before a packaging operation. The device comprises a cutting disk fitted with teeth provided to perforate the film. Such a perforation device is dangerous and requires protection to prevent any accident. Therefore it is necessary to provide a means for protecting such devices. This means has to enable the easy introduction of the strip to be perforated, has to be solid and is required to be not easily removable, which decreases its effectiveness.

It is an object of the invention to provide a device and a process for perforating a film that is not dangerous and which enables the film to be introduced easily.

The invention relates to a device for perforating a film which comprises:
- a perforation means for perforating the film ;
- a protection means arranged around said perforation means; said protection means comprising an arrangement for putting the film into contact with the perforation means.

The invention equally relates to a perforation process for packaging film that comprises the step of introducing the film into the device according to the invention as claimed in 1 to 10 through a transverse opening.

Other characteristics will appear on reading the following description, with reference to the drawings wherein:
- Figure 1 represents an elevation view of the device according to the invention.
- Figure 2 represents a cross-section of the device according to the invention.

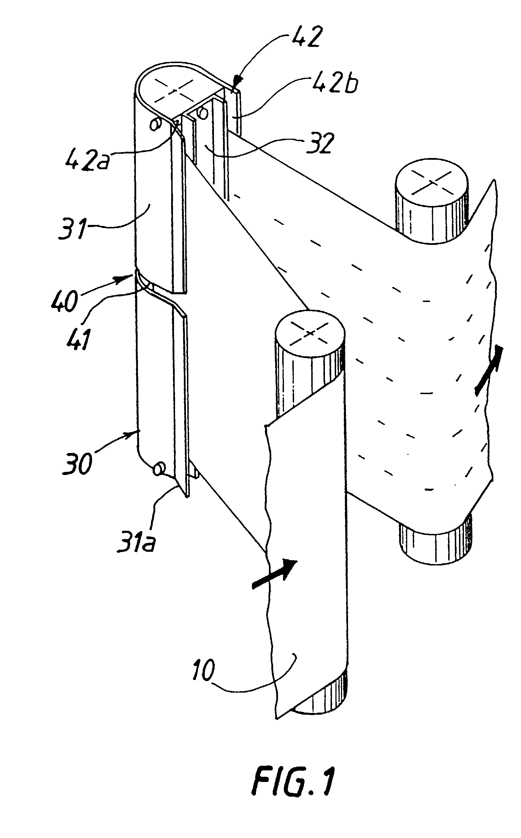

The device of the present invention represented in Figure 1 is provided to perforate a film 10, preferably in a strip. The device comprises a perforation means 20 and a protection means 30 arranged around the perforation means 20. Preferably, the perforation means 20 comprises a plurality of perforating elements 21. The protection means 30 comprises an arrangement 40 provided to put the film into contact with the perforation means 20.

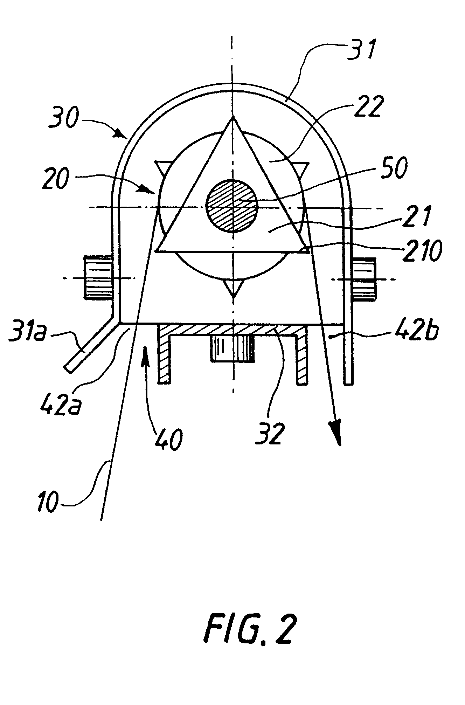

The perforation means represented in Figure 2 comprises a plurality of perforating elements 21 mounted on an axis 50. Separating elements 22 are provided between each perforating element 21 so that each perforating element 21 has a sharp part 210 that projects beyond the elements 22. The elements 22 are for instance cylindrical spacers. The perforating elements of the embodiment are blades, for example triangular. The consecutive perforating elements have to be far enough apart so that the perforations in the film are not too close. The film would have a tendency to tear. The consecutive perforating elements are for example 50 mm apart. Preferably, the film will not be perforated too close to the edge to avoid the film tearing. Advantageously, two consecutive perforating elements are mounted on the axis 50 to be offset at an angle.

The arrangement 40 has a transverse opening 41 and at least one longitudinal opening 42. The transverse opening 41 is such that it is not opposite a perforating element 21. Preferably an opening 41 will be used whose width is less than the distance separating two consecutive perforating elements. The opening 41 has a width less than 50 mm, preferably less than 40 mm. For example an opening of 5 mm width will be selected, to prevent the introduction of a finger. Clearly the access of a finger in the device can be prevented by using cylindrical spacers 22 arranged so that the distance between the spacers and the protection means 30 prevents a finger passing through. In this case, the width of the opening 41 can be greater than 5 mm. The transverse opening 41 is provided to prime the film in the perforation device. Preferably, the opening 41 is arranged approximately in the middle of the protection means 30. The longitudinal opening 42 is provided on approximately the whole length of the protection means 30. The longitudinal opening 42 enables a strip of film to pass through the perforation device. Preferably, the arrangement 40 comprises two longitudinal openings 42a and 42b. The longitudinal opening 42a is provided to enter the strip of film into the perforation device and the longitudinal opening 42b is provided for it to leave.

The perforation means 20 is mounted on an axis 50 which is free to rotate. The protection means 30 is an envelope with an approximately cylindrical shape. This envelope is preferably a metal envelope mounted fixed around the axis 50. It is for example fixed at two ends of the axis 50. An embodiment of the invention can be seen with reference to Figure 2, wherein the envelope is constituted by a U-shaped first part 31 and an approximately plane second part 32. Both these parts are fixed so that they are separated by the two longitudinal openings 42a and 42b. Advantageously, the U-shaped part 31 has one flared end 31a that enables the film to be introduced into the device. Similarly, the part 32 can have edges folded outwards for example at 90°. The transverse opening 41 being necessary for introducing the film into the device, and the film entering by the first longitudinal opening 42a and leaving by the second longitudinal opening 42b, the transverse opening 41 is provided solely on the part 31, it is not necessary on the part 32.

The invention perforation device is provided in a packaging device and does not require additional power. The strip of film 10 is introduced manually into the perforation device. The operator gathers up the end of a strip of film 10 and introduces it into the transverse opening 41. The strip of film then spreads to its whole width in the device for perforation after a few rotations. Then the strip of film is taken out by the transverse opening 42. If an arrangement with two longitudinal openings 42a and 42b is used like the device represented in Figures 1 and 2, the film enters the device by the opening 42a and leaves it by the opening 42b. The film is then moved by any packaging device. The film is held in tension on the perforation means 20, and is in contact with the elements 22 of the perforation means. As the elements 22 and the perforating elements 21 are mounted fixed to the axis 50 which is free to rotate, the movement of the film causes the rotation of the elements 22 and the perforating elements 21. When the film passes through the perforation device, the film comes into contact with the sharp parts 210 of the perforating elements 21 so that the film is perforated. After the film has been perforated, it is for example used to wrap a pallet holding many products.

## Claims

1. A device for perforating a film (10) which comprises:
- a perforation means (20) for perforating the film;
- a protection means (30) arranged around said perforation means (20); said protection means (30) comprising an arrangement (40) for putting the film into contact with the perforation means (20).

2. A device according to Claim 1, wherein said arrangement has a transverse opening (41) and at least one longitudinal opening (42) .

3. A device according to Claim 2, which comprises two longitudinal openings (42a; 42b).

4. A device according to one of claims 1 to 3, wherein said perforation means (20) is mounted on an axis (50) which is free to rotate.

5. A device according to Claim 4, wherein said protection means (30) is an envelope with an approximately cylindrical shape mounted fixed around said axis (50).

6. A device according to Claim 4, wherein the perforation means (20), comprises a plurality of perforating elements (21) mounted on the axis (50).

7. A device according to Claim 6, wherein separating elements (22) are provided between each perforating element (21) so that each perforating element (21) has a sharp part (210) that projects beyond the separating elements (22).

8. A device according to Claim 6, wherein the perforating elements (21) are triangular blades.

9. A device according to one of the previous claims, wherein the transverse opening (41) is arranged so that it is not opposite a perforating element (21).

10. A device according to one of the previous claims, wherein the transverse opening (41) is arranged approximately in the middle of the protection means (30).

11. A method for perforating a packaging film, the method comprising the steps of:
priming said film in a perforating device by introducing one end of said film into a transverse opening of said device, said device having at least one longitudinal opening and a plurality of blades mounted about a rotatable axis;
permitting said end of said film to exit said device through said longitudinal opening so that said film is spread to its whole width in said device; and perforating said film.
